# EUROPEAN PATENT SPECIFICATION

(11) **EP 1 755 874 B1**
(45) Date of publication and mention of the grant of the patent: **21.05.2008**
(21) Application number: 05750192.6
(22) Date of filing: 03.06.2005
(51) Int. Cl.: B29D 30/48

(54) **FORMATION OF A TIRE BEAD ASSEMBLY**
AUSBILDUNG EINER REIFENWULSTANORDNUNG
FORMATION D'UN ENSEMBLE TALON DE PNEU

(30) Priority: 04.06.2004 GB 0412573
(43) Date of publication of application: 28.02.2007
(73) Proprietor: VMI EPE HOLLAND B.V., 8161 RK Epe (NL)
(72) Inventor: NIJHUIS, Erik, NL-7557 BT Hengelo (NL)
(74) Representative: Seerden, Adrianus Maria
(86) International application number: PCT/EP2005/005967
(87) International publication number: WO 2005/118271

(56) References cited:
- EP-A- 0 310 417
- EP-A- 0 466 924
- EP-A- 0 590 906
- WO-A-01/17761
- DD-A1- 118 830
- US-A- 3 895 986
- US-A- 4 795 522
- PATENT ABSTRACTS OF JAPAN vol. 1998, no. 02, 30 January 1998 (1998-01-30) & JP 09 267410 A (TOKYO SEIKO CO LTD; YOKOHAMA RUBBER CO LTD:THE), 14 October 1997 (1997-10-14)

## Description

This invention relates to a method for forming a tire bead assembly of a bead ring and surrounding elastomeric filler material.

A vehicle tire has two laterally spaced apart bead portions which define the innermost diameter of the tire. Each bead portion normally comprises an assembly of an inner metallic tire bead core formed from a plurality of turns of bead wire and an apex filler of elastomeric material surrounding the bead core. The tire bead assemblies provide a smooth transition between the beads and the adjacent side walls of the tire.

A known method of manufacturing a tire bead assembly comprises supporting a preformed bead ring on a support and positioning an annular elastomeric apex filler on a drum so as to be axially adjacent the bead ring. The apex filler is preferably partially uncured and still tacky and comprises an annular base portion adjacent the bead ring and an annular tapering portion supported on an inflatable bladder of the drum and extending away from the base portion and bead ring in the axial direction. On inflation of the bladder the apex filler is flipped over so that the base portion is positioned to surround the bead ring with the tapering portion extending radially outwardly. The still tacky elastomeric apex filler is held in its flipped over position by the bladder until the elastomeric material cures with the apex filler adhered to the bead ring.

As an alternative to an inflatable bladder, EP-A-0590906 discloses rigid flipping means for flipping over the apex filler.

The present invention seeks to provide a new method and apparatus of forming a tire bead assembly.

According to the present invention there is provided a method of forming a tire bead assembly comprising providing a length of an apex filler of elastomeric material, the apex filler having an annular base portion for positioning axially adjacent a bead core ring on a support and an annular tapering portion for extending axially away from the base portion and the bead core ring, gripping a leading end of said length of apex filler so as to retain said end on a cylindrical former, gripping a trailing end of said length of apex filler using gripping means, rotating said cylindrical former so that said length of apex filler is wound thereon in a single turn, whilst moving said gripping means and said gripped trailing end towards said cylindrical former, joining said leading and trailing ends together, and flipping the apex filler so that the base portion radially surrounds the bead core ring and adheres to the latter and the tapering portion extends generally radially outwardly.

The apex filler is conveniently fed in a strip to the cylindrical former and is cut to its desired length upstream of the cylindrical former.

The method may comprise cutting said length of apex filler at an angle other than 90°, e.g. approximately 45°, to its longitudinal direction. The ends of the length of apex filler may be joined by pressing thereon.

The method may comprise gripping said leading end of said length of apex filler using said gripping means and bringing the thus-gripped leading end to the cylindrical former. In an alternative embodiment, an additional gripping means grips a leading end of a subsequent length of apex filler, and moves towards the cylindrical former together with the trailing end gripping means. This speeds up production, since the leading end of the subsequent length of apex filler is adjacent the cylindrical former and is ready to be gripped thereon as soon as the first length of apex filler has been flipped off the former.

The apex filler material may be flipped over using rigid flipping means. The flipped over apex filler may be pressed radially inwardly against the bead core ring by pressing means until the annular base portion is adhered to the bead core ring.

An embodiment of the invention will now be described, by way of example only, with particular reference to the accompanying drawings, in which:
Figure 1 is a perspective view of an apparatus according to the invention for forming a tire bead assembly;
Figures 2 to 5 are schematic sectional views of the tire bead ring positioning station shown in Figure 1;
Figure 6 shows an apexing station of the apparatus of Figure 1 in a first position;
Figure 7 is a fragmentary view showing a gripper clamping an end of the apex filler on to the former of the apexing station of Figure 6;
Figure 8 shows a cutting means of the apexing station;
Figure 9 shows how the ends of the apex filler are joined;
Figures 10 and 11 show the cylindrical former configured for forming tire bead assemblies for small and large tires respectively;
Figure 12 shows one of the flipping means in a non-flipped position;
Figure 13 shows the flipping means of Figure 12 in a flipped position;
Figure 14 shows the apexing station with the flipped-over apex filler;
Figures 15 and 16 are views of a support of a pressing station of the apparatus showing pressing means in radially outer and inner positions, respectively;
Figures 17 and 18 are schematic sectional views, on enlarged scales, showing one embodiment of the pressing means in radially outer and inner positions, respectively;
Figures 19 and 20 are schematic sectional views, on enlarged scales, showing another embodiment of the pressing means in radially outer and inner positions, respectively; and
Figures 21 to 23 are different views of an alternative presser mechanism.

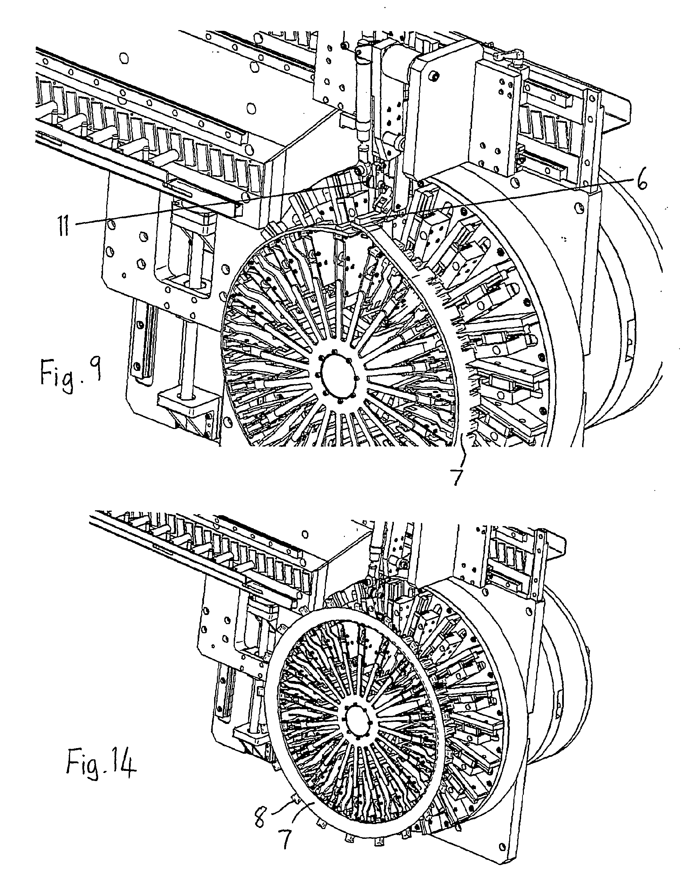

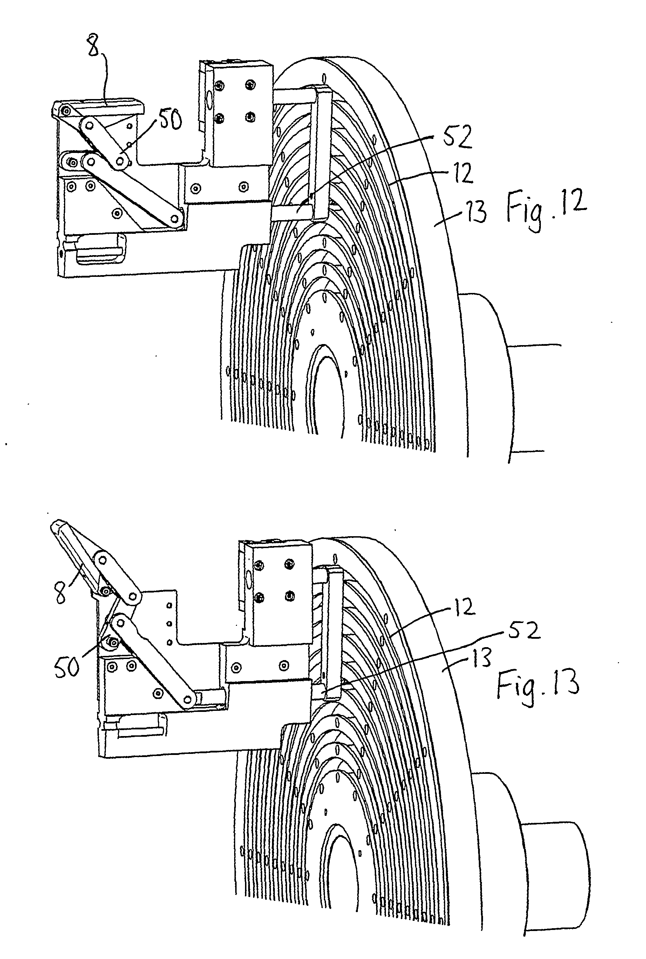

The Figures show an apparatus for forming a tire bead assembly of a bead wire core or ring 16 and surrounding elastomeric filler 13 (see Figures 13 and 14).

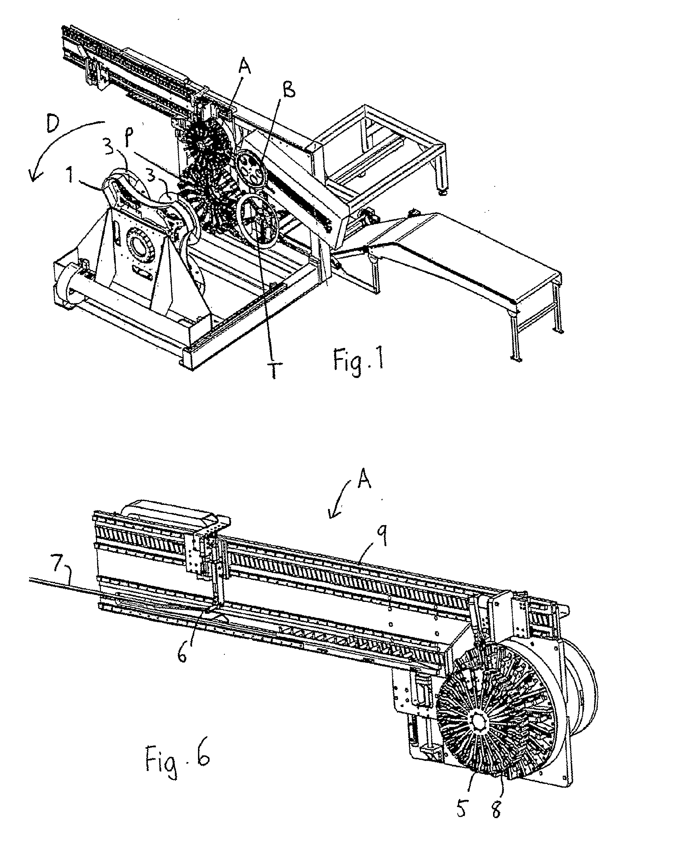

As shown in Figure 1, the apparatus comprises an indexable carrier 1, such as a carousel, rotatable about a horizontal axis, on which a number, e.g. four, of drums 3 are mounted. The indexable carrier 1 is movable (i.e. turnable in the case of the carousel) to move each drum from one to another station. In the case of a carousel mounting equally spaced apart drums 3, there would typically, but not essentially, be a similar number of stations. Thus if the carousel has four drums 3 (as shown in Figure 1), there would typically be four stations, namely a bead ring positioning station B, an apexing station A, a pressing station P and a take-off station T. Two of such stations could be combined into a single station or additional processing stations could be provided.

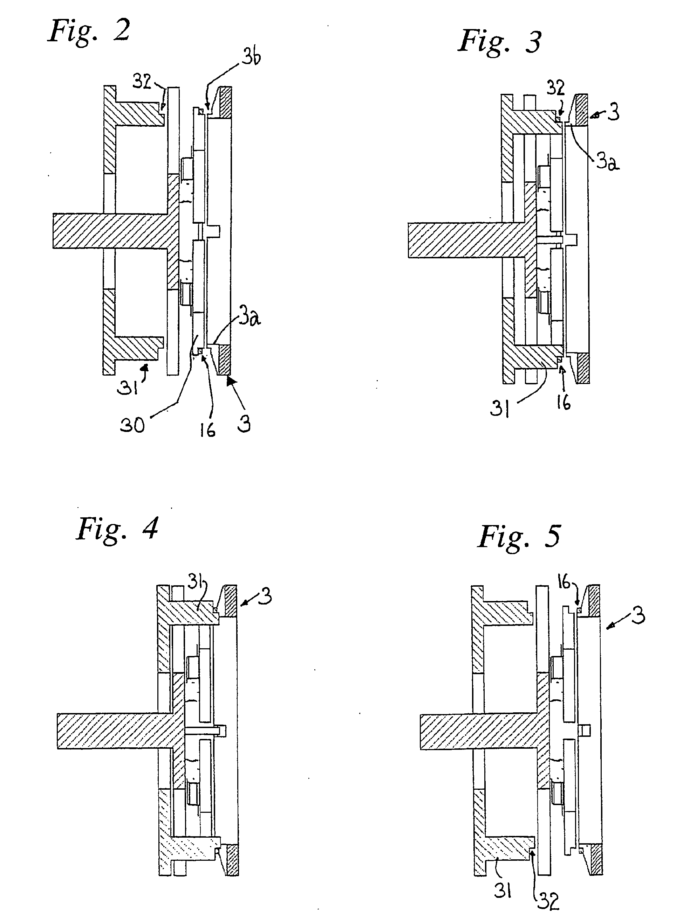

A convenient method of loading the bead wire ring 16 onto a cylindrical rim portion 3b of the drum 3, when the latter is at the bead ring positioning station B, is illustrated in Figures 2 to 5. Figure 2 shows a bead wire ring 16 carried on a bead former 30 at the positioning station B. The ring may be formed at the station B in a known manner by winding either "single wire" or "weftless" tire bead core material onto the former 30. Alternatively, the ring 16 may have been pre-formed and subsequently positioned on item 30, which in this case does not function as a former, for example by means of a robotic arm. The bead former 30 is radially movable between inner and outer positions and in Figure 2 is shown in its radially expanded position. A pusher mechanism 31 is also located at the positioning station and is axially movable between an axially inner position (Figure 3) and an axially outer position (Figure 2).

The pusher mechanism 31 has a carrier 32. In order to load the bead wire ring 16 onto the drum 3, the pusher mechanism is moved axially from its outer position and the bead former 30 is radially contracted to its inner position to enable the carrier 32 to collect the bead wire 16 previously supported on the former 30 (see Figure 3). If not already in a radially collapsed condition, the drum is radially collapsed to allow the pusher mechanism 32 to move into its inner position (see Figure 4) so that the bead wire ring 16, carried on the carrier 32, is moved onto the drum 3. The pusher mechanism is then moved back into its axially inner position and the drum 3 is radially expanded so that the bead wire ring 16 is supported on support member 3a as shown in Figure 5.

As an alternative to the pusher mechanism shown in Figures 2 to 5, the drum 3 could be movable axially towards the bead former. Both the former and the drum are radially contracted, the drum is radially expanded to collect the bead wire ring 16 and is then moved away from the former.

In either embodiment, transfer of the bead wire ring 16 from the former to the drum 3 takes place with no gap therebetween, through which gap the bead wire ring might otherwise slip.

The indexable carrier 1 is then operated to move the drum 3 in direction D (Figure 1) carrying the bead wire ring 16 into the apexing station A and then axially towards a cylindrical former 5 of the apexing station.

Figures 6 to 14 show the apexing station A, or parts of the apparatus positioned at the apexing station A.

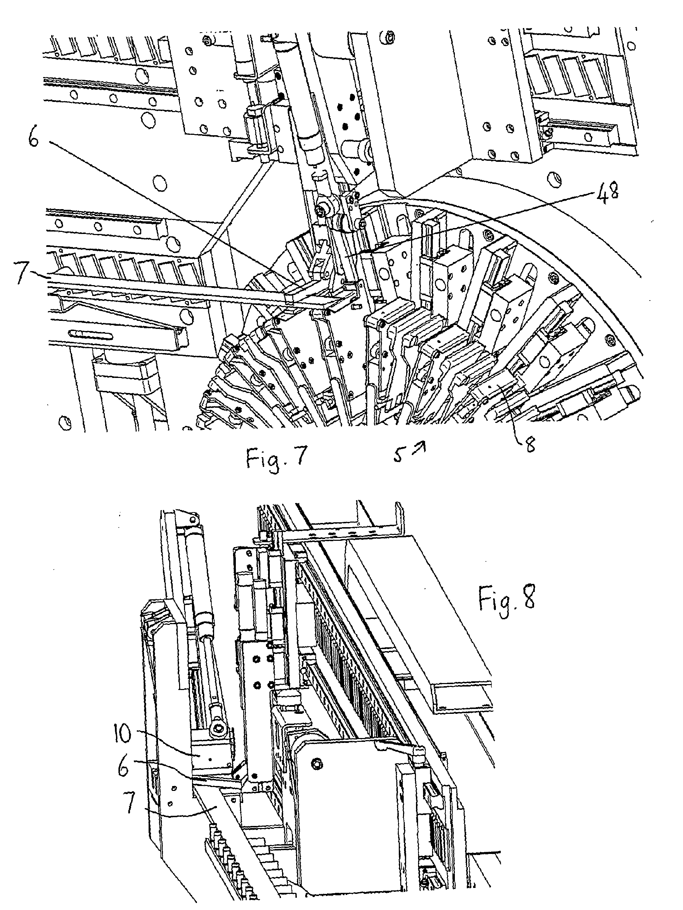

As shown in Figure 6, the cylindrical former 5 is defined by a plurality of rigid, circumferentially spaced apart fingers 8, and the apexing station further comprises a linear feed path 9. A gripper 6 is mounted on the feed path 9 and grips the cut end of a freshly-extruded elastomeric apex filler 7. The gripper 6 then moves, for example by means of a linear motor, to the position shown in Figure 7. A former clamp 48, formed as part of one of the fingers 8, clamps the leading end of the apex filler on to the cylindrical former 5. The gripper 6 is then released and returns to the position of Figure 6. The gripper is also shown at this position in Figure 8. The gripper again clamps the apex filler 7 and a cutting means 10, comprising a knife, cuts the apex filler at an angle of 45° to the feed direction at a position spaced from the leading end thereof by a distance substantially equal to the circumference of the cylindrical former 5. The cylindrical former 5 is rotated through one revolution so as to wind the apex filler 7 thereon, as shown in Figure 9. During this winding the gripper 6 carries the trailing end of the apex filler towards the cylindrical former, at a speed which is matched to the circumferential speed of the cylindrical former by electronic controls. This avoids flailing of the apex filler 7.

In an alternative embodiment, prior to cutting the apex filler 7, the latter is wound on to the cylindrical former 5 by rotating the latter through part of a revolution, for example through 340°. The apex filler 7 is then cut near to the cylindrical former and its trailing end is held by the gripper which moves as the former turns through the remainder of the revolution.

In still a further embodiment, there are two grippers, both movable along the linear feed path 9. The gripper nearest the cylindrical former grips the trailing end of the length of apex filler being wound on to the cylindrical former 5, as mentioned above. The other gripper grips the leading end of a subsequent length of apex filler and moves adjacent the trailing end gripper. Thus, the leading end of the subsequent length is ready near the cylindrical former as soon as the first length is unloaded therefrom, and the rate of production is increased.

The ends of the length of apex filler 7, both of which have been cut at 45°, now abut each other with the trailing end overlying the leading end. A wheel means 11 presses down on said trailing end and the two still tacky ends are thus adhered together without requiring an additional adhesive.

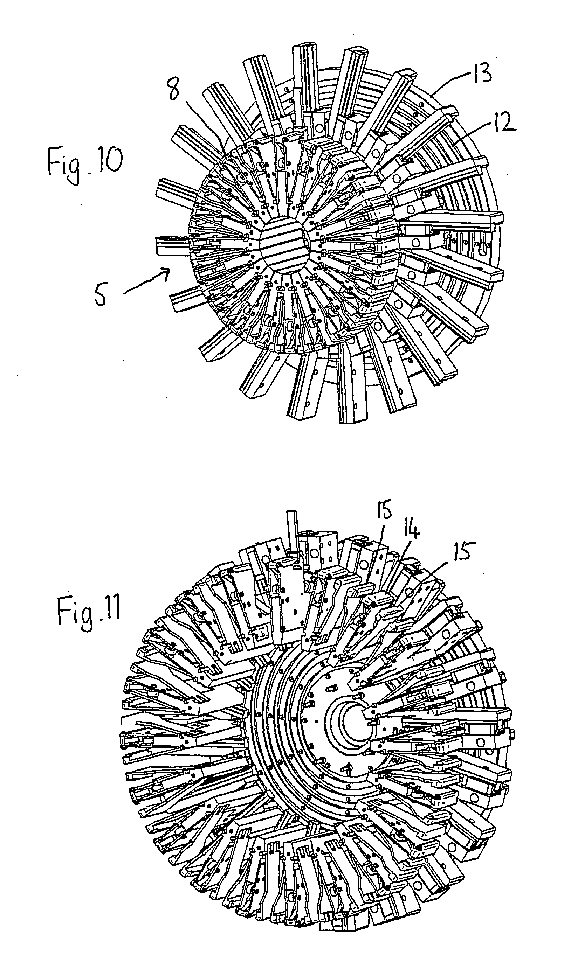

Figure 10 shows the cylindrical former 5 configured for forming a tire bead assembly of relatively small diameter, e.g. 38 cm. The fingers 8 are mounted for radial movement and their positions are adjusted by adjusting means comprising projections received in a cam slot, e.g. a spiral slot 12 in a plate 13. When relative rotation takes place between the fingers and the plate 13, the cam follower projections move along the spiral slot 12, causing the fingers 8 to move radially inwardly or outwardly, depending on the direction of rotation.

Figure 11 shows the fingers 8 moved radially outwardly to form a tire bead assembly of larger diameter, e.g. 61 cm. Each finger 8 comprises a central elongate member 14 and outer jaws 15. As the finger moves radially outwardly, the jaws 15 expand, helping to maintain the circular shape of the cylindrical former 5 and avoiding large gaps between the fingers 8.

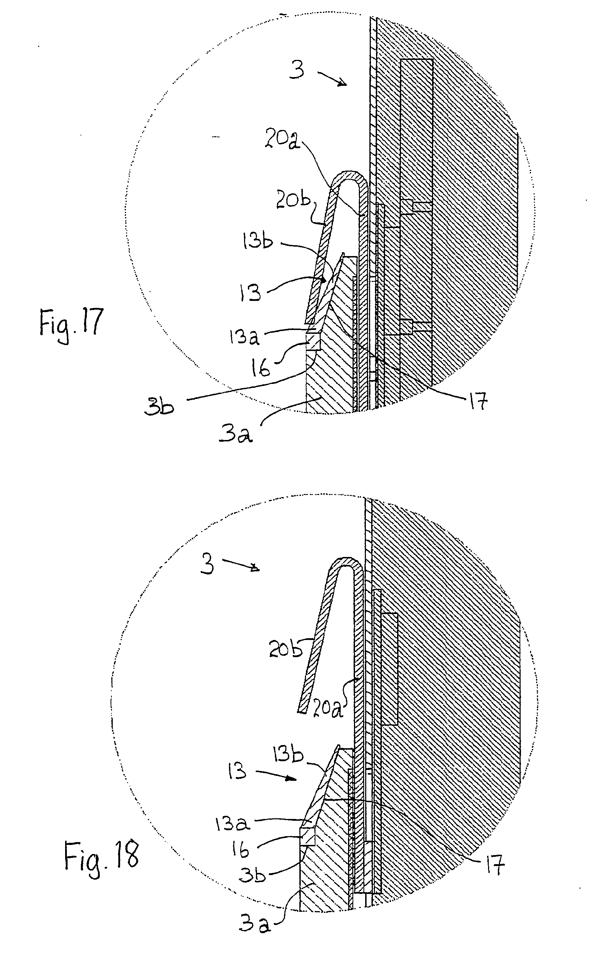

Figure 12 shows one of the fingers 8 connected via a linkage 50 to an actuator 52 having projections extending through the spiral slot 12. From the position shown in Figure 12, the plate 13 is moved axially towards the finger 8 which pushes the actuator to the left as shown in the Figure. This operates the linkage 50 which moves the finger 8 to the position shown in Figure 13. The apex filler material 7 is flipped over by the fingers 8 over into the position shown in Figures 14,17 and 18 in which the annular base portion 13a radially surrounds the bead ring 16 supported on the support member 3a and the tapering portion 13b extends like a collar radially outwardly of the annular base portion 13a and is pressed against an inclined annular support surface 17 (see Figures 17 and 18) of the support member 3a.

The drum 3 is then moved back away from the cylindrical former 5 which is then ready to accept elastomeric filler material to create another annulus of filler material on the cylindrical former 5.

The indexable carrier 1 is then operated to move the drum 3 to the pressing station P.

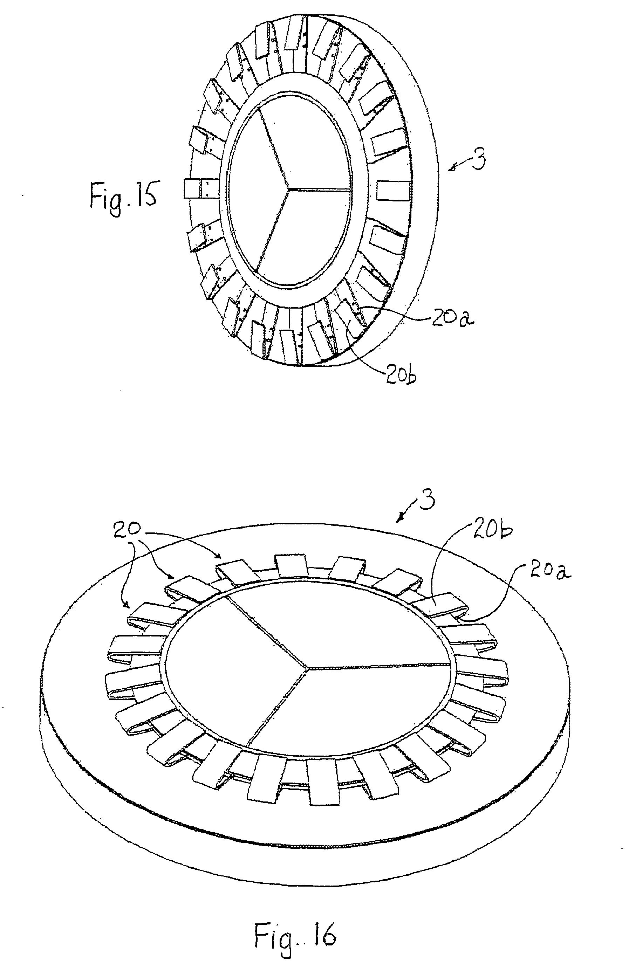

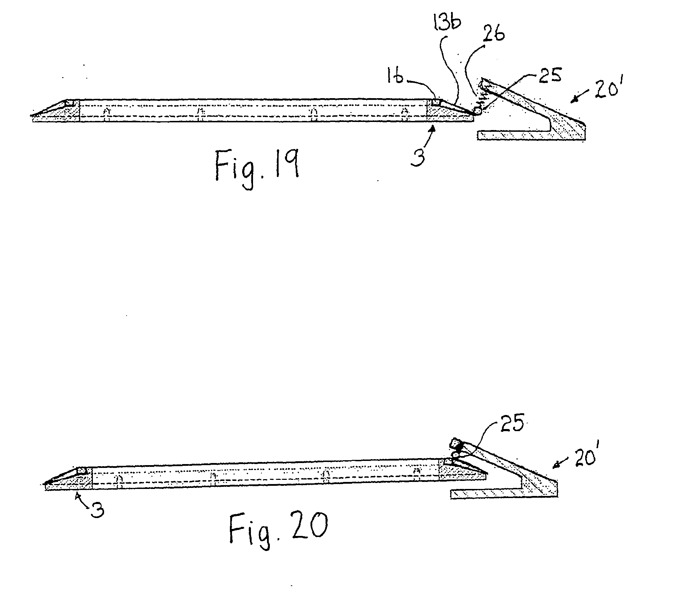

Circumferentially spaced apart presser members 20 (see Figures 15 and 16) mounted for radial movement are moved from a radially outer position (Figures 15 and 18) to a radially inner position (Figures 16 and 17). Each presser member 20 has a pair of pressing surfaces 20a and 20b angled relative to one another. On movement of the presser members into their inner positions, the surfaces 20a slide against a rear surface of the support member 3a and the pressing surfaces 20b engage a tapered surface of the annular tapering portion 13b and press the entire annulus of elastomeric material 13 radially inwardly onto the bead core ring 16 carried on the support member 3a. As can be seen in Figure 17, the surface 20b presses the annular base portion against the bead core ring 16 in the radially innermost position of each presser member. The still tacky elastomeric filler material is thus pressed radially inwards onto the bead wire core until it is adhered to the latter. During this radially inward movement of the presser members 20, the pressing surfaces 20b stretch the filler material around its circumference to relieve stress in the filler material. The presser members 20 are then moved radially outwards to their outer positions (see Figure 18). In a modified design shown in Figs. 19 and 20, presser members 20' are provided with roller means, e.g. one or more rollers 25 resiliently mounted by spring means 26 at the free end of each presser member, to press against the annular tapering portion 13b during radial inward movement of the presser movements.

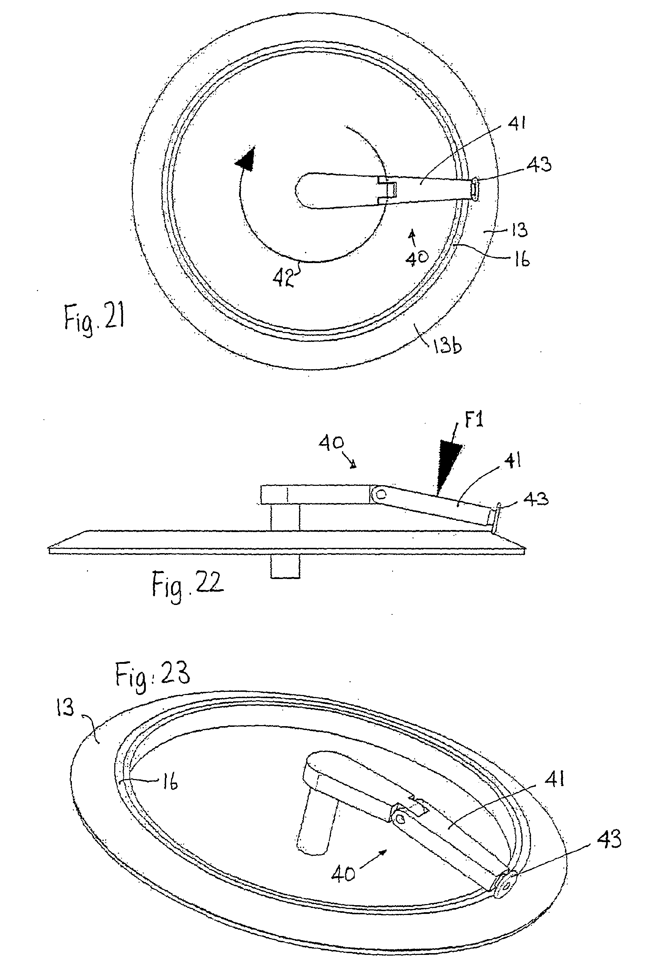

Figures 21 to 23 show an alternative pressing means in which the elastomeric annular tapering portion 13b is pressed against the bead ring 16 by a rotatable presser mechanism 40 which can be rotated in the direction shown by arrow 42 and which comprises an arm 41 and a presser wheel 43 which on rotation presses the tapering portion 13b against bead ring 16 by application of a force F1.

The carrier 1 is then indexed so that the drum 3 is moved into the take-off station T, where the tire bead assembly of the bead wire core and elastomeric filler material is removed from the support member 3a. If the drum 3 is movable axially, removal of the tire bead assembly can be essentially the reverse of the process of loading the bead core ring 16 at the bead ring positioning station B.

For maximum production rates the indexable carrier 1 (e.g. the carousel 1) could be provided with the same number of drums 3 as there are "stations" so that on each indexed movement of the carrier, each support means is moved from one to another station. Alternatively, however, a single support means could be provided on the carrier for movement sequentially from one to the next station.

Although a four-station apparatus has been described above it will be appreciated that apparatus 1 with a different number of stations could be provided. For example in a three-station apparatus, the presser mechanism 40 could be integrated into the apexing station A. In a two- or three- station apparatus, the indexable carrier could be moved between a first station, at which the bead wire ring is positioned on the support member 3a and, subsequently, at which the completed tire bead assembly is removed.

It is possible for the drum 3 not to be mounted on an indexable carrier. In this case the support means 3 would remain in the forming station whilst the bead wire core is positioned on the support member 3a and, subsequently, when the completed tire bead assembly is removed from the support member 3a.

## Claims

1. A method of forming a tire bead assembly comprising providing a length of an apex filler (7) of elastomeric material, the apex filler (7) having an annular base portion (13a) for positioning axially adjacent a bead core ring (16) on a support and an annular tapering portion (13 b) for extending axially away from the base portion and the bead core ring (16) gripping a leading end of said length of apex filler (7) so as to retain said end on a cylindrical former (5), gripping a trailing end of said length of apex filler (7) using gripping means (6) rotating said cylindrical former (6) so that said length of apex filler (7) is wound thereon in a single turn, whilst moving said gripping means (6) and said gripped trailing end towards said cylindrical former (5), joining said leading and ends together, and flipping the apex filler (7) so that the base portion radially surrounds the bead core ring (16) and adheres to the latter and the tapering portion extends generally radially outwardly.

2. A method according to claim 1, wherein the apex filler (7) is fed in a strip to the cylindrical former (5) and is cat to its desired length upstream of the cylindrical former (5).

3. A method according to claim 2, comprising cutting said length of apex filler (7) at an angle other than 90° to its longitudinal direction.

4. A method according to claim 3, wherein said angle is approximately 45°.

5. A method according to any preceding claim, wherein the ends of the length of apex filler (7) are joined by pressing thereon.

6. A method according to any preceding claim, comprising gripping said leading end of said length of apex filler (7) using said griping means (6) and bringing the thus-gripped leading end to the cylindrical former (5).

7. A method according to any one of claims 1 to 5, wherein an additional gripping means grips a leading end of a subsequent length of apex filler (7) and moves towards the cylindrical former (5) together with the trailing end gripping means (6).

8. A method according to any preceding claim wherein the apex filler material is flipped over using rigid flipping means (8).

9. A method according to claim 8, wherein the flipped over apex filler (7) is pressed radially inwardly against the bead core ring (16) by pressing means (20) until the annular base portion is adhered to the bead core ring (16).

## Patentansprüche

1. Verfahren zum Formen einer Reifenwulstanordnung, umfassend: Vorsehen einer Länge eines Apex-Füllstoffs (7) aus Elastomermaterial, wobei der Apex-Füllstoff (7) einen ringförmigen Basisabschnitt (13a) für eine axial angrenzende Anordnung an einem Wulstkernring (16) auf einem Träger sowie einen ringförmigen abgeschrägten Abschnitt (13b), der sich axial von dem Basisabschnitt und dem Wulstkernring (16) weg erstreckt, aufweist; Greifen eines vorderen Endes der Länge des Apex-Füllstoffs (7), um dieses Ende an einer zylindrischen Formeinrichtung (5) zu halten; Greifen eines hinteren Endes der Länge des A-pex-Füllstoffs (7) unter Verwendung eines Greifmittels (6); Drehen der zylindrischen Formeinrichtung (5), so dass die Länge des Apex-Füllstoffs (7) mit einer einzigen Windung darauf gewickelt wird, während das Greifmittel (6) und das gegriffene hintere Ende zu der zylindrischen Formeinrichtung (5) hin bewegt werden; Verbinden des vorderen und des hinteren Endes miteinander; und Umdrehen des Apex-Füllstoffs (7), so dass der Basisabschnitt den Wulstkernring (16) radial umgibt und an ihm haftet und der abgeschrägte Abschnitt sich insgesamt radial nach außen erstreckt.

2. Verfahren nach Anspruch 1, bei dem der Apex-Füllstoff (7) in einem Streifen der zylindrischen Formeinrichtung (5) zugeführt wird und der zylindrischen Formeinrichtung (5) vorgelagert in seine gewünschte Länge geschnitten wird.

3. Verfahren nach Anspruch 2, umfassend das Schneiden der Länge des Apex-Füllstoffs (7) in einem Winkel, der nicht 90° beträgt, zu seiner Längsrichtung.

4. Verfahren nach Anspruch 3, bei dem der Winkel ungefähr 45° beträgt.

5. Verfahren nach einem der vorigen Ansprüche, bei dem die Enden der Länge des Apex-Füllstoffs (7) durch darauf ausgeübten Druck verbunden werden.

6. Verfahren nach einem der vorigen Ansprüche, umfassend: Greifen des vorderen Endes der Länge des Apex-Füllstoffs (7) unter Verwendung des Greifmittels (6) und Bringen des so gegriffenen vorderen Endes zu der zylindrischen Formeinrichtung (5).

7. Verfahren nach einem der Ansprüche 1 bis 5, bei dem ein zusätzliches Greifmittel ein vorderes Ende einer nachfolgenden Länge des Apex-Füllstoffs (7) greift und sich zusammen mit dem Greifmittel (6) des hinteren Endes zu der zylindrischen Formeinrichtung (5) hin bewegt.

8. Verfahren nach einem der vorigen Ansprüche, bei dem das Apex-Füllmaterial unter Verwendung eines steifen Umdrehmittels (8) umgedreht wird.

9. Verfahren nach Anspruch 8, bei dem der umgedrehte Apex-Füllstoff (7) durch ein Druckmittel (20) radial nach innen gegen den Wulstkernring (16) gedrückt wird, bis der ringförmige Basisabschnitt an dem Wulstkernring (16) haftet.

## Revendications

1. Procédé de formation d'un ensemble talon de pneu comprenant la fourniture d'une longueur d'un bourrage sur tringle (7) de matériau élastomère, le bourrage sur tringle (7) ayant une partie de base annulaire (13a) destinée à être positionnée axialement adjacente à un anneau de tringle (16) sur un support, et une partie conique annulaire (13b) destinée à s'étendre axialement à distance de la partie de base, et l'anneau de tringle (16) fixant une extrémité avant de ladite longueur du bourrage sur tringle (7), de façon à retenir ladite extrémité sur un gabarit cylindrique (5), fixant une extrémité arrière de ladite longueur de bourrage sur tringle (7) à l'aide de moyens de serrage (6), tournant ledit gabarit cylindrique (5), de sorte que ladite longueur de bourrage sur tringle (7) est enroulée autour de celui-ci en un seul tour, tout en déplaçant lesdits moyens de serrage (6) et ladite extrémité arrière serrée vers ledit gabarit cylindrique (5), reliant lesdites extrémités avant et arrière, et retournant le bourrage sur tringle (7), de sorte que la partie de base entoure radialement l'anneau de tringle (16) et adhère à ce dernier, et de sorte que la partie conique s'étend généralement radialement vers l'extérieur.

2. Procédé selon la revendication 1, dans lequel le bourrage sur tringle (7) est amené dans une bande vers le gabarit cylindrique (5) et est découpé à la longueur souhaitée en amont du gabarit cylindrique (5).

3. Procédé selon la revendication 2, comprenant la découpe de ladite longueur du bourrage sur tringle (7) à un angle autre que 90° par rapport à sa direction longitudinale.

4. Procédé selon la revendication 3, dans lequel ledit angle est d'environ 45°.

5. Procédé selon une quelconque revendication précédente, dans lequel les extrémités de la longueur de bourrage sur tringle (7) sont reliées par la pression sur celles-ci.

6. Procédé selon une quelconque revendication précédente, comprenant la fixation de ladite extrémité avant de ladite longueur de bourrage sur tringle (7) à l'aide desdits moyens de serrage (6), et le positionnement de l'extrémité avant ainsi serrée sur le gabarit cylindrique (5).

7. Procédé selon l'une quelconque des revendications 1 à 5, dans lequel un moyen de serrage supplémentaire fixe une extrémité avant d'une . longueur subséquente de bourrage sur tringle (7), et se déplace vers le gabarit cylindrique (5) conjointement au moyen de serrage (6) de l'extrémité arrière.

8. Procédé selon une quelconque revendication précédente, dans lequel le matériau de bourrage sur tringle est retourné à l'aide de moyens de retournement rigides (8).

9. Procédé selon la revendication 8, dans lequel le bourrage sur tringle (7) retourné est poussé radialement vers l'intérieur contre l'anneau de tringle (16) par des moyens de pression (20) jusqu'à ce que la partie de base annulaire adhère à l'anneau de tringle (16).
